(19)

Europäisches
Patentamt

European
Patent Office

Office européen
des brevets

(11) **EP 4 534 594 A1**

(12) **EUROPEAN PATENT APPLICATION**
published in accordance with Art. 153(4) EPC

(43) Date of publication:
**09.04.2025 Bulletin 2025/15**

(21) Application number: **23811942.4**

(22) Date of filing: **22.02.2023**

(51) International Patent Classification (IPC):
***C08L 23/08*** (2025.01)        ***C08F 210/16*** (2006.01)
***B29C 55/12*** (2006.01)

(52) Cooperative Patent Classification (CPC):
**B29C 55/12; C08F 210/16; C08L 23/08**

(86) International application number:
**PCT/KR2023/002563**

(87) International publication number:
**WO 2023/229155 (30.11.2023 Gazette 2023/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.05.2022 KR 20220065423**

(71) Applicant: **Lotte Chemical Corporation**
**Seoul 05551 (KR)**

(72) Inventors:
• **CHO, Jin Ju**
  **Daejeon 34110 (KR)**
• **KIM, Song Ho**
  **Daejeon 34110 (KR)**
• **OH, Sun Hyung**
  **Daejeon 34110 (KR)**
• **MOON, Yun A**
  **Daejeon 34110 (KR)**

(74) Representative: **Germain Maureau**
**12, rue Boileau**
**69006 Lyon (FR)**

(54) **POLYETHYLENE RESIN COMPOSITION FOR BIAXIALLY ORIENTED FILM**

(57)    Disclosed is a polyethylene resin composition for a biaxially oriented film moldable with a biaxial stretcher, exhibiting excellent stretching properties, biaxially stretchable in a wider temperature range, and having excellent thickness smoothness and transparency. The present invention provides a polyethylene resin composition for a biaxially oriented film, wherein the composition includes 5 wt% to 20 wt% of a molecular weight fraction fractionated at a temperature of 35 °C or lower, and 5 wt% to 20 wt% of a molecular weight fraction fractionated at a temperature of 94 °C or higher through analytical temperature rising elution fractionation (a-TREF) analysis.

FIG. 2

EP 4 534 594 A1

**Description**

**TECHNICAL FIELD**

**Technical Field**

The present invention relates to a polyethylene resin composition, and more particularly, to a polyethylene resin composition for a biaxially oriented film.

**BACKGROUND ART**

In the plastic-related industry, the market environment is rapidly changing as new issues emerge, including the issue of ocean plastics. Container packaging materials, which are heavily used, are no exception, and in addition to the production of packaging materials, the processed food/beverage and distribution sectors are also required to respond to environmental issues such as plastic waste and greenhouse gas reduction.

Particularly, packaging container-related companies have recognized the need to concentrate on the development of materials capable of reducing the environmental burden, and globally, under the premise of recycling, the development and use of uni-material-related products, and bio-plastics that contribute to the reduction of carbon dioxide ($CO_2$) are becoming more active.

Globally, polyethylene (PE)-based materials are the mainstream of a uni-material trend. This is because in the process of designing a multilayer film, a sealant layer is first reviewed in consideration of the contents, use, and the like, and since the rate of employing polyethylene in the middle sealant layer is relatively high, when the entire product is made of a uni-material, the surface material is likely to be polyethylene-based as a result.

In the United States, a system for recovering and recycling polyethylene products is being established, so that it is expected that the supply of polyethylene-based materials will dominate, and Mitsui Dow Chemical Company, which has raw material resin and film production companies, and the like under its wing, has been focused on developing a uni-material polyethylen-based material. In addition, Dow Chemical Company is changing a pouch material used for film applications having too many functions (dried fruit, frozen food, pet food, etc.) from PET/PE-based materials to PE Uni material-based materials (single product).

Meanwhile, even in a biaxially oriented film, the above-described development trend may continue if a layer is made of a uni-material by replacing previously used biaxially oriented polyamide (BOPA) or biaxially oriented polyethylene terephthalate (BOPET) with biaxially oriented polyethylenewith (BOPE), but there has not yet been a case presented that shows satisfactory stretching properties for polyethylene moldable with a biaxial stretcher.

Korean Patent No. 0746253 discloses a polyethylene-based stretched film having excellent Elmendorf tear strength and being uniformly stretchable, but it is difficult to obtain satisfactory strength properties when biaxially stretched with an actually presented composition.

**DISCLOSURE OF THE INVENTION**

**TECHNICAL PROBLEM**

An aspect of the present invention provides a polyethylene resin composition for a biaxially oriented film moldable with a biaxial stretcher, exhibiting excellent stretching properties, biaxially stretchable in a wider temperature range, and having excellent thickness smoothness and transparency.

**TECHNICAL SOLUTION**

According to an aspect of the present invention, there is provided a polyethylene resin composition for a biaxially oriented film, wherein the composition includes 5 wt% to 20 wt% of a molecular weight fraction fractionated at a temperature of 35 °C or lower, and 5 wt% to 20 wt% of a molecular weight fraction fractionated at a temperature of 94 °C or higher through analytical temperature rising elution fractionation (a-TREF) analysis.

In addition, there is provided a polyethylene resin composition for a biaxially oriented film, wherein the resin composition includes (A) 1 wt% to 30 wt% of a copolymer of ethylene and an olefin having 4 to 10 carbon atoms, the copolymer having a density of 0.860 $g/cm^3$ to 0.910 $g/cm^3$, (B) 60 wt% to 98 wt% of a copolymer of ethylene and an olefin having 4 to 10 carbon atoms, the copolymer having a density of 0.925 $g/cm^3$ to 0.940 $g/cm^3$, and (C) 1 wt% to 10 wt% of a copolymer of ethylene and an olefin having 4 to 10 carbon atoms, the copolymer having a density of 0.940 $g/cm^3$ to 0.970 $g/cm^3$.

In addition, there is provided a polyethylene resin composition for a biaxially oriented film, wherein the resin composition includes 5 wt% to 20 wt% of a molecular weight fraction fractionated at a temperature of 35 °C or lower, and 5 wt% to 20 wt% of a molecular weight fraction fractionated at a temperature of 94 °C or higher through analytical temperature rising elution fractionation (a-TREF) analysis.

In addition, there is provided a polyethylene resin composition for a biaxially oriented film, wherein the (A) copolymer has a melt index (190 °C, 2.16 kg load) of 0.2 g/10 min to 6 g/10 min, the (B) copolymer has a melt index (190 °C, 2.16 kg load) of 1 g/10 min to 3.5 g/10 min, and the (C) copolymer has a melt index (190 °C, 2.16 kg load) of 0.2 g/10 min to 2.5 g/10 min.

In addition, there is provided a polyethylene resin composition for a biaxially oriented film, wherein the (A) copolymer has a glass transition temperature (Tg) of -50 °C to -45 °C, the (B) copolymer has a melting point temperature (Tm) of 120 °C 130 °C and a crystallization temperature (Tc) of 110 °C to 115 °C, and the (C) copolymer has a melting point temperature (Tm) of 130 °C to 140 °C and a crystallization temperature (Tc) of 115 °C to 125 °C.

In addition, there is provided a polyethylene resin composition for a biaxially oriented film, wherein the resin composition has a melt index (190 °C, 2.16 kg load) of 1 g/10 min to 3 g/10 min, and a density of 0.920 g/cm$^3$ to 0.940 g/cm$^3$.

In addition, there is provided a polyethylene resin composition for a biaxially oriented film, wherein the resin composition has a tensile strength of 700 kgf/cm$^2$ or greater in each of longitudinal and transverse directions measured under the following conditions, a stretching thickness deviation of 15% or less, and a haze of 10% or less.

[Measurement method]

Using the above-described resin composition, a biaxially stretched film having a film thickness of 20 $\mu$m and a film width of 8 m is manufactured under the conditions of a molding rate of 400 m/min, a longitudinal direction (MD) stretching ratio of 5 times and a stretching temperature of 112 °C to 128 °C, a transverse stretching ratio of 9 times and a stretching temperature of 108 °C to 116 °C, and a sample of the biaxially stretched film is measured for a tensile strength in accordance with ASTM D882 regulations using a tensile tester (model name: Instron, 4466) under the conditions of a load cell of 100 N and a test rate of 500 mm/min, and then, the manufactured film is cut to a length of 1 m, and measured for a thickness at any point of 8 divided sections thereof to obtain a deviation in comparison with a thickness before stretching, thereby measuring a stretching thickness deviation by averaging the deviations, and the sample is measured for a haze of the stretched film in accordance with ASTM D1003 regulations using a haze meter (model name: Nippon Denshoku, NDH5000) .

## ADVANTAGEOUS EFFECTS

According to the present invention, a polyethylene resin composition is provided by mixing three types of copolymers of ethylene and an olefin having 4 to 10 carbon atoms, the copolymers which are different from each other in density in a certain range, and furthermore, the polyethylene resin composition having fraction properties according to specific a-TREF analysis using CFC is presented, so that it is possible to provide a polyethylene resin composition for a biaxially oriented film moldable with a biaxial stretcher, exhibiting excellent stretching properties, biaxially stretchable in a wider temperature range, and having excellent thickness smoothness and transparency.

## BRIEF DESCRIPTION OF THE DRAWINGS

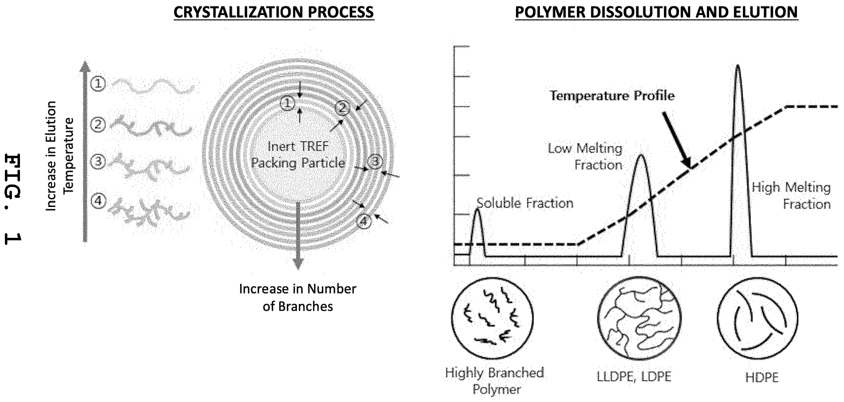

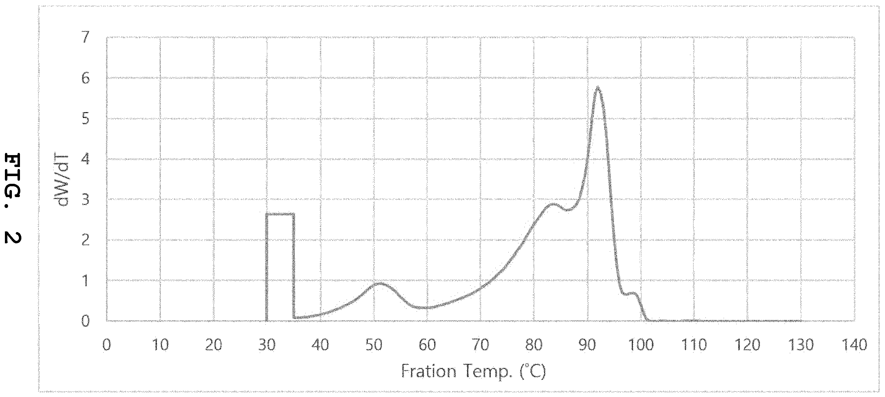

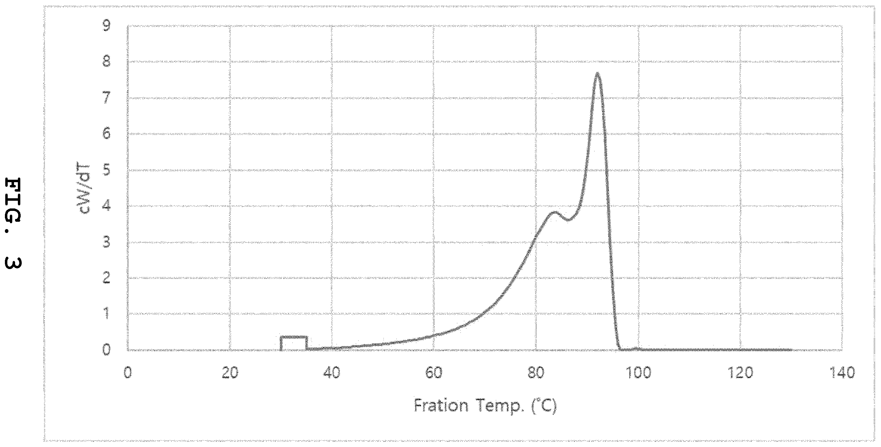

FIG. 1 is a conceptual diagram for describing a TREF analysis method for a resin composition in the present invention. FIGS. 2 and FIG. 3 are graphs showing temperatureelution fractionation curves analyzed by temperature rise elution fractionation using TREF for compositions prepared according to Example 1 and Comparative Example 1, respectively.

## BEST MODE FOR CARRYING OUT THE INVENTION

Hereinafter, the present invention will be described in detail with reference to preferred embodiments. Prior to this, it will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention. Therefore, the configurations of the embodiments described herein are merely the most preferred embodiments of the present invention, and are not intended to limit the technical idea of the present invention. Therefore, it should be understood that there may be various equivalents and modifications that may substitute the embodiments at the time of filing the present application.

In a situation in which a composition exhibiting satisfactory stretching properties has not yet been presented for a layer to be made of a uni-material by replacing typically used BOPA or BOPET with BOPE, the present inventors have confirmed that a polyethylene resin composition having fraction properties according to specific a-TREF analysis using cross-fractionation chromatography (CFC), and furthermore, prepared by mixing three types of copolymers of ethylene and an olefin having 4 to 10 carbon atoms, the copolymers which are different from each other in density in a certain range, is moldable with a biaxial stretcher, exhibits excellent stretching properties, biaxially stretchable in a wider temperature range, and having excellent thickness flatness and transparency, which has led to the present invention.

Therefore, the present invention discloses a polyethylene resin composition for a biaxially oriented film, wherein the resin composition includes 5 wt% to 20 wt% of a molecular weight fraction fractionated at a temperature of 35 °C or lower, and 5 wt% to 20 wt% of a molecular weight fraction fractionated at a temperature of 94 °C or higher through analytical temperature rising elution fractionation (a-TREF) analysis, and the resin composition according to the present invention preferably includes (A) 1 wt% to 30 wt% of a copolymer of ethylene and an olefin having 4 to 10 carbon atoms, the copolymer having a density of 0.860 $g/cm^3$ to 0.910 $g/cm^3$, (B) 60 wt% to 98 wt% of a copolymer of ethylene and an olefin having 4 to 10 carbon atoms, the copolymer having a density of 0.925 $g/cm^3$ to 0.940 $g/cm^3$, and (C) 1 wt% to 10 wt% of a copolymer of ethylene and an olefin having 4 to 10 carbon atoms, the copolymer having a density of 0.940 $g/cm^3$ to 0.970 $g/cm^3$.

In the present invention, the (A) copolymer is an ultra-low density polyethylene, and may have a density of 0.860 $g/cm^3$ to 0.910 $g/cm^3$, preferably 0.870 $g/cm^3$ to 0.910 $g/cm^3$. If the density is out of the above-described range, it is difficult to perform biaxial stretching.

In addition, the (A) copolymer preferably has a glass transition temperature of -40 °C or lower, more preferably, -50 °C to -4 0°C. In this case, it is possible to prevent degradation in physical properties of a final film when used in a low-temperature environment.

In addition, as the (A) copolymer, a copolymer prepared using a metallocene catalyst may preferably be used, and a copolymer of ethylene and an $\alpha$-olefin such as 1-butene, 1-hexene, or 1-octene may be used, preferably a copolymer of ethylene and an $\alpha$-olefin having 6 to 8 carbon atoms may be used, and more preferably, a copolymer of ethylene and 1-hexene or 1-octene may be used. In addition, the melt index (190 °C, 2.16 kg load) may be 0.2 g/10 min to 6 g/10 min, preferably 0.5 g/10 min to 2 g/10 min. If a copolymer prepared using a Ziegler-Natta catalyst is applied, a copolymer prepared using an $\alpha$-olefin having a carbon number other than 4 to 10 is applied as a comonomer to be copolymerized with ethylene, or the melt index is out of the above-described range, it may be difficult to perform biaxial stretching molding. A method for polymerizing the (A) copolymer is not particularly limited, and the (A) copolymer may be prepared by any method such as a vapor method, a solution method, a slurry method, or the like.

The (A) copolymer may be included in an amount of 1 wt% to 30 wt%, preferably 10 wt% to 30 wt%, in the total resin composition. If the content of the (A) copolymer is out of the above-described range, it is also difficult to perform biaxial stretching, and if greater than 30 wt%, mechanical properties are degraded due to a large number of low-crystalline molecules, thereby degrading a final tensile strength.

In the present invention, the (B) copolymer is a linear low-density polyethylene, and may have a density of 0.925 $g/cm^3$ to 0.940 $g/cm^3$, preferably 0.925 $g/cm^3$ to 0.935 $g/cm^3$. If the density is out of the above-described range, it is difficult to perform biaxial stretching.

In addition, as the (B) copolymer, a copolymer prepared using a Ziegler-Natta catalyst may preferably be used to secure a range in which film molding is possible, and a copolymer of ethylene and an $\alpha$-olefin such as 1-butene, 1-hexene, or 1-octene may be used, preferably a copolymer of ethylene and 1-butene, 1-hexene, or 1-octene, and the melt index (190 °C, 2.16 kg load) may be 1 g/10 min to 3.5 g/10 min, preferably 2 g/10 min to 3 g/10 min. If a copolymer prepared using a metallocene catalyst is applied, a copolymer prepared using an $\alpha$-olefin having a carbon number other than 4 to 10 is used as a comonomer to be copolymerized with ethylene, or the melt index is out of the above-described range, it may be difficult to perform biaxial stretching molding. A method for polymerizing the (B) copolymer is not particularly limited, and the (A) copolymer may be prepared by any method such as a vapor method, a solution method, a slurry method, or the like.

In addition, the (B) copolymer preferably has a melting point temperature of 120 °C to 130 °C and a crystallization temperature of 110 °C to 115 °C such that a final film is biaxially stretchable in a wider temperature range, and accordingly, is biaxially stretchable in a wide temperature range of a stretching process temperature of 108 °C to 128 °C.

The (B) copolymer may be included in an amount of 60 wt% to 98 wt%, preferably 65 wt% to 80 wt%, in the total resin composition. If the content of the (B) copolymer is out of the above-described range, it is also difficult to perform biaxial stretching, and if less than 60 wt%, the tensile strength of a film is significantly degraded.

In the present invention, the (C) copolymer is a high-density polyethylene which is mixed to improve the tensile strength of a final film as well as to improve stretching processability and color, and may have a density of 0.940 $g/cm^3$ to 0.970 $g/cm^3$, preferably 0.950 $g/cm^3$ to 0.960 $g/cm^3$. If the density is out of the above-described range, it is difficult to perform biaxial stretching.

In addition, as the (C) copolymer, a copolymer of ethylene and an $\alpha$-olefin such as 1-butene, 1-hexene, or 1-octene may be used, preferably a copolymer of ethylene and 1-butene or 1-hexene, and the melt index (190 °C, 2.16 kg load) may be 0.2 g/10 min to 2.5 g/10 min, preferably 0.2 g/10 min to 1 g/10 min. If a copolymer prepared using an α-olefin having a carbon number other than 4 to 10 is used as a comonomer to be copolymerized with ethylene, or the melt index is out of the above-described range, it may be difficult to perform biaxial stretching molding. A method for polymerizing the (C) copolymer is not particularly limited, and the (A) copolymer may be prepared by any method such as a vapor method, a solution method, a slurry method, or the like.

In addition, in order to further improve moldability by maintaining rigidity of a film in a stretching process and to maximize mechanical properties of a final biaxially stretched film, the (C) copolymer preferably may have a melting point temperature of 130 °C or higher, more preferably 130 °C to 140 °C, and may have a crystallization temperature of 115 °C to 125 °C.

The (C) copolymer may be included in an amount of 1 wt% to 10 wt%, preferably 3 wt% to 10 wt%, in the total resin composition. If the content of the (C) copolymer is greater than 10 wt%, it is impossible to achieve stretching in a stretching process due to a large number of crystalline molecules, so that fracture may occur.

In accordance with the mixture of the (A) copolymer, the (B) copolymer, and the (C) copolymer as described above, a final resin composition may have a melt index (190 °C, 2.16 kg load) of 1 g/10 min to 3 g/10 min, preferably 1.5 g/10 min to 2.5 g/10 min, and may have a density of 0.900 g/cm$^3$ to 0.940 g/cm$^3$, preferably 0.925 g/cm$^3$ to 0.935 g/cm$^3$.

In the present invention, it has been confirmed that when a polyethylene resin composition having the above-described composition is molded into a biaxially oriented film, if the polyethylene resin composition has certain fraction properties in accordance with analytical temperature rising elution fractionation (a-TREF) using cross-fractionation chromatography (CFC), satisfactory strength properties are implemented while showing smooth moldability, biaxial stretching is possible in a wider temperature range, and thickness smoothness and transparency are improved, and specifically, as described, the resin composition according to the present invention may include 5 wt% to 20 wt% of a molecular weight fraction fractionated at a temperature of 35 °C or lower, and 5 wt% to 20 wt% of a molecular weight fraction fractionated at a temperature of 94 °C or higher through the analytical temperature rising elution fractionation (a-TREF) analysis, and may preferably include 10 wt% to 20 wt% of a molecular weight fraction fractionated at a temperature of 35 °C or lower, and 5 wt% to 15 wt% of a molecular weight fraction fractionated at a temperature of 94 °C or higher.

In the present invention, a temperature-molecular weight fraction curve through the a-TREF analysis method is based on Flory Huggins' statistical thermodynamic equation (Equation 1 below), which expresses a phenomenon in which the melting point decreases by a diluent, as a temperature rise elution fractionation method.

[Equation 1]

$$\frac{1}{T_m} - \frac{1}{T_m{}^0} = -\left(\frac{R}{\Delta Hu}\right) ln N_A$$

In Equation 1, $T_m$ is the melting point temperature of a pure polymer, $T_m{}^0$ is the melting point temperature of a diluted polymer, R is a gas constant, $\Delta H_u$ is the amount of heat of fusion per repeated unit of a polymer, and $N_A$ is the molar fraction of a diluent.

A solvent or comonomer may be referred to as a diluent of a polymer, and the crystallization temperature of a polyolefin decreases as the concentration of the diluent increases. A TREF experiment requires melting a sample and injecting the melted sample in a high-temperature state into a column, followed by gradually lowering the temperature to induce crystallization of the sample, and when a polymer is precipitated inside the column by lowering the temperature, the temperature of the column is gradually increased again according to a temperature increase process, and a sample in which the polymer precipitated in the column is eluted according to the temperature is analyzed, and a molecular weight fraction eluted at each temperature is distinguished (FIG. 1).

The polyethylene resin composition for a biaxially oriented film according to the present invention may be added with a common polyethylene additive so to be applied for various purposes, and for example, an antioxidant, a heat and light stabilizer, an antistatic agent, a lubricant, an antiblocking agent, a preservative, a processing aid, a slip agent, an anti-pressure-sensitive adhesive agent, a pigment, a flame retardant, a foaming agent, and the like may be added thereto in an appropriate amount.

The polyethylene resin composition for a biaxially oriented film according to the present invention may be prepared by mixing and extruding the above-described components according to a typical method known in the art. For example, the above-described components may be introduced into a twin-screw extruder and melt-kneaded to prepare the polypropylene resin composition for a biaxially oriented film.

The polyethylene resin composition for a biaxially oriented film according to the present invention is biaxially stretchable, and exhibits excellent stretching properties, and specifically, may have a tensile strength of 700 kgf/cm$^2$ or

greater in each of longitudinal and transverse directions, preferably a tensile strength of 950 kgf/cm$^2$ or greater in the transverse direction, a stretching thickness deviation of 15% or less, preferably 10% or less, and a haze of 10% or less, preferably 8% or less, as measured under the following conditions.

[Measurement method]

Using the above-described resin composition, a biaxially stretched film having a film thickness of 20 μm and a film width of 8 m is manufactured under the conditions of a molding rate of 400 m/min, a longitudinal direction (MD) stretching ratio of 5 times and a stretching temperature of 112 °C to 128 °C, a transverse stretching ratio of 9 times and a stretching temperature of 108 °C to 116 °C, and a sample of the biaxially stretched film is measured for a tensile strength in accordance with ASTM D882 regulations using a tensile tester (model name: Instron, 4466) under the conditions of a load cell of 100 N and a test rate of 500 mm/min, and then, the manufactured film is cut to a length of 1 m, and measured for a thickness at any point of 8 divided sections thereof to obtain a deviation in comparison with a thickness before stretching, thereby measuring a stretching thickness deviation by averaging the deviations, and the sample is measured for a haze of the stretched film in accordance with ASTM D1003 regulations using a haze meter (model name: Nippon Denshoku, NDH5000).

Hereinafter, the present invention will be described in more detail through specific Examples and Comparative Examples. In Examples and Comparative Examples, the density, melt index, and CFC analysis were measured according to the following methods.

[Measurement method]

(1) Density

The measurement was performed in accordance with ASTM D1505.

(2) Melt index (MI)

The measurement was performed in accordance with ASTM D1238 under the conditions of 190 °C and a 2.16 kg load.

(3) a-TREF analysis using cross-fractionation chromatography (CFC)

The CFC analysis was performed on a CFC instrument from Polymer Char, Valencia, Spain. The instrument includes a TREF column in the first dimension, a GPC column set in the second dimension, and an infrared detector (IR4 from Polymer Char) downstream of the GPC column. A sample to be analyzed was stirred at 150 °C for 80 minutes to be dissolved to a concentration of about 2.5 mg/ml in 1,2,3-trichlorobenzene. The solution was loaded in the center of the TREF column, stabilized at 100 °C for 45 minutes, and slowly cooled to 35 °C (0.5 °C/min) to crystallize a polymer. Thereafter, the low temperature was maintained for 10 minutes, and then a soluble fraction was injected into the GPC column. All of GPC analysis was performed using a 1,2,4-trichlorobenzene solvent at 1 ml/min, a column temperature of 140 °C or lower, and in a "nested GPC injection."

(4) Thermal properties

10 mg of a test piece was pre-melted at 220 °C for 5 minutes under a nitrogen gas atmosphere using a differential scanning calorimeter (trade name: DSC, manufactured by Perkin-Elmer Co.), and then the temperature was dropped to -100 °C at a temperature decrease rate of 5 °C. Thereafter, the temperature was increased to 200 °C at a temperature increase rate of 10 °C/min, and cooling was performed at a temperature decrease rate the same as the temperature increase rate to confirm the glass transition temperature Tg, the melting point temperature Tm, and the crystallization temperature Tc.

## Examples and Comparative Examples

Compositions as shown in Table 1 and Table 2 were prepared, wherein in the case of a copolymer mixing composition (Examples 1 to 5, Comparative Examples 2, 3, 5, and 6), a copolymer of a corresponding combination was introduced into a twin-screw extruder and melt-blended under the condition of 180 °C to 220 °C to prepare a polyethylene resin composition in a pellet phase, and in the case of Comparative Examples 1 and 4, a copolymer was separately prepared without a mixing process. FIG. 2 and FIG. 3 respectively show temperatureelution fractionation curves analyzed by temperatureincreasing elution fractionation using TREF for the compositions prepared according to Example 1 and Comparative Example 1.

**Experimental Examples**

Using the above-described resin composition, a biaxially stretched film having a film thickness of 20 $\mu$m and a film width of 8 m was manufactured under the conditions of a molding rate of 400 m/min, a longitudinal direction (MD) stretching ratio of 5 times and a stretching temperature of 112 °C to 128 °C, a transverse stretching ratio of 9 times and a stretching temperature of 108 °C to 116 °C, and a sample of the biaxially stretched film was measured for a tensile strength in accordance with ASTM D882 regulations using a tensile tester (model name: Instron, 4466) under the conditions of a load cell of 100 N and a test rate of 500 mm/min, and then, the manufactured film was cut to a length of 1 m, and measured for a thickness at any point of 8 divided sections thereof to obtain a deviation in comparison with a thickness before stretching, thereby measuring a stretching thickness deviation by averaging the deviations, and the sample was measured for a haze of the stretched film in accordance with ASTM D1003 regulations using a haze meter (model name: Nippon Denshoku, NDH5000). The stretching thickness deviation is an index indicating stretching processability, and is marked as '◎' for a thickness deviation of 10% or less, '∘' for a thickness deviation of 15% or less, '△' for a thickness deviation of greater than 15%, and 'X' for fracture.

[Table 1]

| Classification | | Example 1 | | | Example 2 | | | Example 3 | | | Example 4 | | | Example 5 | | |
|---|---|---|---|---|---|---|---|---|---|---|---|---|---|---|---|---|
| Copolymer | | A | B | C | A | B | C | A | B | C | A | B | C | A | B | C |
| Melt index (g/10 min) | | 1 | 2.5 | 0.3 | 1 | 2.5 | 0.3 | 1 | 2 | 0.3 | 3.5 | 1.5 | 0.3 | 1 | 2.5 | 0.3 |
| Density (g/cm$^3$) | | 0.88 | 0.93 | 0.96 | 0.88 | 0.93 | 0.96 | 0.88 | 0.93 | 0.95 | 0.91 | 0.93 | 0.95 | 0.88 | 0.93 | 0.96 |
| Comonomer | | C8 | C4 | C4 | C8 | C4 | C4 | C8 | C6 | C4 | C6 | C4 | C6 | C8 | C8 | C4 |
| Tg | | -45 | - | - | -45 | - | - | -45 | - | - | -45 | - | - | -45 | - | - |
| Tm | | - | 126 | 134 | - | 126 | 134 | - | 126 | 133 | - | 126 | 133 | - | 126 | 134 |
| Tc | | - | 112 | 118 | - | 112 | 118 | - | 113 | 117 | - | 112 | 117 | - | 112 | 118 |
| Composition ratio (wt%) | | 20 | 75 | 5 | 20 | 70 | 10 | 25 | 72 | 3 | 30 | 65 | 5 | 20 | 75 | 5 |
| Final melt index (g/10 min) | | 1.7 | | | 1.6 | | | 1.6 | | | 2.3 | | | 1.7 | | |
| Final density (g/cm$^3$) | | 0.926 | 0.928 | | | 0.926 | | | 0.932 | | | 0.926 | | | | | |
| a-TREF Weight fraction (%) | 35 °C or lower | 12 | 10 | | | 15 | | | 20 | | | 12 | | | | | |
| | 94 °C or higher | 10 | 15 | | | 7 | | | 11 | | | 11 | | | | | |
| Stretching processability | | ◎ | ○ | | | ◎ | | | ○ | | | ◎ | | | | | |
| Tensile strength (kgf/cm$^3$) | MD | 750 | 800 | | | 700 | | | 710 | | | 780 | | | | | |
| | TD | 1200 | 1500 | | | 1000 | | | 950 | | | 1400 | | | | | |
| Haze (%) | | 6 | 7 | | | 5.5 | | | 8 | | | 6 | | | | | |

* Notes
- Comonomer : C4 (1-butene), C6(1-hexene), C8(1-octene)

EP 4 534 594 A1

(continued)

| Classification | Example 1 | | | Example 2 | | | Example 3 | | | Example 4 | | | Example 5 | | |
|---|---|---|---|---|---|---|---|---|---|---|---|---|---|---|---|
| Copolymer | A | B | C | A | B | C | A | B | C | A | B | C | A | B | C |
| - Stretching direction : MD (longitudinal direction), TD (transverse direction)<br>- Copolymer A: Metallocene-based ultra-low density polyethylene<br>- Copolymer B: Ziegler-Natta-based linear low-density polyethylene<br>- Copolymer C: High-density polyethylene | | | | | | | | | | | | | | | |

[Table 2]

| Classification | Comparative Example 1 | Comparative Example 2 | | Comparative Example 3 | | Comparative Example 4 | Comparative Example 5 | | | Comparative Example 6 | | |
|---|---|---|---|---|---|---|---|---|---|---|---|---|
| Copolymer | B | A | B | B | C | B | A | B | C | A | B | C |
| Melt index (g/10 min) | 3.2 | 1 | 2.5 | 2.5 | 0.3 | 2 | 1 | 2.5 | 0.3 | 1 | 2.5 | 0.3 |
| Density (g/cm$^3$) | 0.93 | 0.88 | 0.94 | 0.93 | 0.96 | 0.92 | 0.88 | 0.93 | 0.96 | 0.88 | 0.93 | 0.96 |
| Comonomer | C4 | C8 | C4 | C4 | C4 | C6 | C8 | C4 | C4 | C8 | C4 | C4 |
| Tg | - | -45 | - | - | - | - | -45 | - | - | -45 | - | - |
| Tm | 124 | - | 126 | 124 | 134 | 128 | - | 124 | 134 | - | 124 | 134 |
| Tc | 113 | - | 114 | 112 | 118 | 115 | - | 112 | 118 | - | 112 | 118 |
| Composition ratio (wt%) | 100 | 20 | 80 | 95 | 5 | 100 | 18 | 70 | 12 | 40 | 55 | 5 |
| Final melt index (g/10 min) | 3.2 | 2.1 | | 2.2 | | 2 | 1.9 | | | 1.6 | | |
| Final density (g/cm$^3$) | 0.938 | 0.925 | | 0.936 | | 0.926 | 0.929 | | | 0.916 | | |
| a-TREF Weight fraction (%) 35 °C or lower | 2 | 20 | | 1.8 | | 5 | 12 | | | 32 | | |
| a-TREF Weight fraction (%) 94 °C or higher | 4 | 3 | | 10 | | 1 | 17 | | | 3 | | |
| Stretching processability | X | Δ | | X | | Δ | X | | | Δ | | |
| Tensile strength (kgf/cm$^3$) MD | - | 200 | | - | | 250 | - | | | 100 | | |
| Tensile strength (kgf/cm$^3$) TD | - | 400 | | - | | 350 | - | | | 150 | | |
| Haze | - | 15 | | - | | 5 | - | | | 5 | | |

* Notes
- Comonomer : C4 (1-butene), C6 (1-hexene), C8 (1-octene)
- Stretching direction : MD (longitudinal direction), TD (transverse direction)

(continued)

| Classification | Comparative Example 1 | Comparative Example 2 | | Comparative Example 3 | | Comparative Example 4 | Comparative Example 5 | | | Comparative Example 6 | | |
|---|---|---|---|---|---|---|---|---|---|---|---|---|
| Copolymer | B | A | B | B | C | B | A | B | C | A | B | C |
| - Copolymer A: Metallocene-based ultra-low density polyethylene<br>- Copolymer B: Ziegler-Natta-based linear low-density polyethylene<br>- Copolymer C: High-density polyethylene | | | | | | | | | | | | |

Referring to Table 1, in the case of a film (Examples 1 to 5) manufactured using a resin composition exhibiting a certain range of a TREF weight fraction, which is the resin composition having a certain range of melt index and density, and furthermore, having a certain range of glass transition temperature, melting point temperature, or crystallization temperature, and prepared using a specific comonomer by including a mixture of the (A) ultra-low density polyethylene, the (B) linear low-density polyethylene, and the (C) high-density polyethylene, it can be confirmed that the film is biaxially stretchable in a wider temperature range, and has excellent thickness smoothness and color properties.

In this regard, referring to Table 2, in the case of the (B) linear low-density polyethylene alone (Comparative Examples 1 and 4), it can be seen that there is a problem in that fracture occurs during stretching or the thickness deviation is greater than 15%, and biaxial stretching properties are poor beyond a desired TERF weight fraction.

In addition, even in the case in which the high-density polyethylene is not mixed (Comparative Example 2) or the (A) ultra-low density polyethylene is not mixed (Comparative Example 3), it can be seen that there is also a problem in that fracture occurs during stretching or the thickness deviation is greater than 15%, and biaxial stretching properties are poor beyond a desired TERF weight fraction.

In addition, it has been confirmed that even when all of the (A) to (C) copolymers are mixed, if the content of the (C) high-density polyethylene is excessive (Comparative Example 5), it is impossible to achieve stretching in a stretching process due to a large number of crystalline molecules, so that fracture occurs, and if the content of the (A) ultra-low density polyethylene is excessive (Comparative Example 6), mechanical properties are degraded due to a large number of low-crystalline molecules, thereby degrading a final tensile strength, so that it is difficult to achieve application to an actual product.

The preferred embodiments of the present invention have been described in detail. The description of the present invention has been presented for purposes of illustration, and it will be understood by those skilled in the art that various changes in form and details may be made therein without departing from the spirit and scope of the invention.

Therefore, the scope of the present invention is represented by the following claims rather than the above detailed description, and all changes and changed forms derived from the meaning, scope, and equivalent concepts of the claims should be construed as being included in the scope of the present invention.

**Claims**

1. A polyethylene resin composition for a biaxially oriented film, the composition comprising:

   5 wt% to 20 wt% of a molecular weight fraction fractionated at a temperature of 35 °C or lower; and
   5 wt% to 20 wt% of a molecular weight fraction fractionated at a temperature of 94 °C or higher through analytical temperature rising elution fractionation (a-TREF) analysis.

2. The polyethylene resin composition of claim 1, wherein the resin composition comprises:

(A) 1 wt% to 30 wt% of a copolymer of ethylene and an olefin having 4 to 10 carbon atoms, the copolymer having a density of 0.860 $g/cm^3$ to 0.910 $g/cm^3$;
(B) 60 wt% to 98 wt% of a copolymer of ethylene and an olefin having 4 to 10 carbon atoms, the copolymer having a density of 0.925 $g/cm^3$ to 0.940 $g/cm^3$; and
(C) 1 wt% to 10 wt% of a copolymer of ethylene and an olefin having 4 to 10 carbon atoms, the copolymer having a density of 0.940 $g/cm^3$ to 0.970 $g/cm^3$.

3. The polyethylene resin composition of claim 2, wherein the (A) copolymer has a melt index (190 °C, 2.16 kg load) of 0.2 g/10 min to 6 g/10 min, the (B) copolymer has a melt index (190 °C, 2.16 kg load) of 1 g/10 min to 3.5 g/10 min, and the (C) copolymer has a melt index (190 °C, 2.16 kg load) of 0.2 g/10 min to 2.5 g/10 min.

4. The polyethylene resin composition of claim 3, wherein the (A) copolymer has a glass transition temperature (Tg) of -50 °C to -45 °C, the (B) copolymer has a melting point temperature (Tm) of 120 °C 130 °C and a crystallization temperature (Tc) of 110 °C to 115 °C, and the (C) copolymer has a melting point temperature (Tm) of 130 °C to 140 °C and a crystallization temperature (Tc) of 115 °C to 125 °C.

5. The polyethylene resin composition of claim 1, wherein the resin composition has a melt index (190 °C, 2.16 kg load) of 1 g/10 min to 3 g/10 min, and a density of 0.920 $g/cm^3$ to 0.940 $g/cm^3$.

6. The polyethylene resin composition of claim 1, wherein the resin composition has a tensile strength of 700 $kgf/cm^2$ or greater in each of longitudinal and transverse directions measured under the following conditions, a stretching thickness deviation of 15% or less, and a haze of 10% or less.
[Measurement method]
Using the above-described resin composition, a biaxially stretched film having a film thickness of 20 $\mu$m and a film width of 8 m is manufactured under the conditions of a molding rate of 400 m/min, a longitudinal direction (MD) stretching ratio of 5 times and a stretching temperature of 112 °C to 128 °C, a transverse stretching ratio of 9 times and a stretching temperature of 108 °C to 116 °C, and a sample of the biaxially stretched film is measured for a tensile strength in accordance with ASTM D882 regulations using a tensile tester (model name: Instron, 4466) under the conditions of a load cell of 100 N and a test rate of 500 mm/min, and then, the manufactured film is cut to a length of 1 m, and measured for a thickness at any point of 8 divided sections thereof to obtain a deviation in comparison with a thickness before stretching, thereby measuring a stretching thickness deviation by averaging the deviations, and the sample is measured for a haze of the stretched film in accordance with ASTM D1003 regulations using a haze meter (model name: Nippon Denshoku, NDH5000) .

FIG. 1

FIG. 2

FIG. 3

## INTERNATIONAL SEARCH REPORT

| International application No. |
|---|
| **PCT/KR2023/002563** |

### A. CLASSIFICATION OF SUBJECT MATTER

**C08L 23/08**(2006.01)i; **C08F 210/16**(2006.01)i; **B29C 55/12**(2006.01)i

According to International Patent Classification (IPC) or to both national classification and IPC

### B. FIELDS SEARCHED

Minimum documentation searched (classification system followed by classification symbols)

C08L 23/08(2006.01); B32B 27/32(2006.01); B65D 65/02(2006.01); C08J 5/18(2006.01); C08L 23/06(2006.01); G09F 3/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: a-TREF(Analytical Temperature rising elution fractionation), 분획(fraction), 폴리에틸렌 수지(polyethylene resin), 필름(film)

### C. DOCUMENTS CONSIDERED TO BE RELEVANT

| Category* | Citation of document, with indication, where appropriate, of the relevant passages | Relevant to claim No. |
|---|---|---|
| Y | JP 4748346 B2 (DAINIPPON PRINTING CO., LTD.) 17 August 2011 (2011-08-17)<br>See paragraphs [0009], [0011] and [0034]; and claim 1. | 1-6 |
| Y | KR 10-0346585 B1 (LG CHEM, LTD.) 04 October 2002 (2002-10-04)<br>See pages 3 and 4; and claims 1 and 2. | 1-6 |
| A | KR 10-2003-0034114 A (BOREALIS TECHNOLOGY OY) 01 May 2003 (2003-05-01)<br>See claim 1; and tables 1 and 2. | 1-6 |
| A | US 2016-0115285 A1 (CHINA PETROLEUM & CHEMICAL CORPORATION et al.) 28 April 2016 (2016-04-28)<br>See paragraphs [0082] and [0083]; claim 1; and examples 1 and 2. | 1-6 |
| A | US 2004-0014895 A1 (FARLEY, J. M. et al.) 22 January 2004 (2004-01-22)<br>See entire document. | 1-6 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **24 May 2023** | **24 May 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<div align="center">

**INTERNATIONAL SEARCH REPORT**
**Information on patent family members**

</div>

International application No.

**PCT/KR2023/002563**

| Patent document cited in search report | | | Publication date (day/month/year) | Patent family member(s) | | | Publication date (day/month/year) |
|---|---|---|---|---|---|---|---|
| JP | 4748346 | B2 | 17 August 2011 | JP | 2002-196678 | A | 12 July 2002 |
| KR | 10-0346585 | B1 | 04 October 2002 | KR | 10-1999-0005132 | A | 25 January 1999 |
| KR | 10-2003-0034114 | A | 01 May 2003 | AT | 314931 | T | 15 February 2006 |
| | | | | AU | 2001-266220 | B2 | 22 July 2004 |
| | | | | AU | 6622001 | A | 14 January 2002 |
| | | | | CN | 1210148 | C | 13 July 2005 |
| | | | | CN | 1440330 | A | 03 September 2003 |
| | | | | DE | 60116490 | T2 | 31 August 2006 |
| | | | | EP | 1294564 | A1 | 26 March 2003 |
| | | | | EP | 1294564 | B1 | 04 January 2006 |
| | | | | EP | 1623825 | A2 | 08 February 2006 |
| | | | | EP | 1623825 | A3 | 03 December 2008 |
| | | | | ES | 2256259 | T3 | 16 July 2006 |
| | | | | US | 2003-0171501 | A1 | 11 September 2003 |
| | | | | US | 7018710 | B2 | 28 March 2006 |
| | | | | WO | 02-02323 | A1 | 10 January 2002 |
| | | | | ZA | 200300246 | B | 21 January 2004 |
| US | 2016-0115285 | A1 | 28 April 2016 | BR | 102015027108 | A2 | 27 September 2016 |
| | | | | BR | 102015027108 | B1 | 12 January 2021 |
| | | | | CN | 105524337 | A | 27 April 2016 |
| | | | | CN | 105524337 | B | 10 April 2018 |
| | | | | CN | 105524338 | A | 27 April 2016 |
| | | | | CN | 105524338 | B | 10 April 2018 |
| | | | | CN | 105524339 | A | 27 April 2016 |
| | | | | CN | 105524339 | B | 29 September 2017 |
| | | | | CN | 105623055 | A | 01 June 2016 |
| | | | | CN | 105623055 | B | 02 March 2018 |
| | | | | CN | 105623056 | A | 01 June 2016 |
| | | | | CN | 105623056 | B | 13 February 2018 |
| | | | | CN | 105623057 | A | 01 June 2016 |
| | | | | CN | 105623057 | B | 13 February 2018 |
| | | | | CN | 105623058 | A | 01 June 2016 |
| | | | | CN | 105623058 | B | 13 February 2018 |
| | | | | CN | 105623059 | A | 01 June 2016 |
| | | | | CN | 105623059 | B | 13 February 2018 |
| | | | | CN | 105623060 | A | 01 June 2016 |
| | | | | CN | 105623060 | B | 13 February 2018 |
| | | | | CN | 105623061 | A | 01 June 2016 |
| | | | | CN | 105623061 | B | 02 March 2018 |
| | | | | EP | 3015502 | A1 | 04 May 2016 |
| | | | | EP | 3015502 | B1 | 14 December 2016 |
| | | | | ES | 2619196 | T3 | 23 June 2017 |
| | | | | JP | 2016-128557 | A | 14 July 2016 |
| | | | | JP | 6615572 | B2 | 04 December 2019 |
| | | | | KR | 10-2016-0049499 | A | 09 May 2016 |
| | | | | KR | 10-2400379 | B1 | 19 May 2022 |
| | | | | US | 9988505 | B2 | 05 June 2018 |
| US | 2004-0014895 | A1 | 22 January 2004 | AT | 361946 | T | 15 June 2007 |
| | | | | AT | 369395 | T | 15 August 2007 |
| | | | | AT | 432960 | T | 15 June 2009 |

Form PCT/ISA/210 (patent family annex) (July 2022)

**INTERNATIONAL SEARCH REPORT**
Information on patent family members

International application No.

**PCT/KR2023/002563**

| Patent document cited in search report | Publication date (day/month/year) | Patent family member(s) | | Publication date (day/month/year) |
|---|---|---|---|---|
| | | AT | 461040 T | 15 April 2010 |
| | | AU | 7010801 A | 02 January 2002 |
| | | AU | 7137701 A | 08 January 2002 |
| | | AU | 7140801 A | 02 January 2002 |
| | | AU | 7140901 A | 02 January 2002 |
| | | BR | 0111934 A | 17 June 2003 |
| | | BR | 0112383 A | 30 December 2003 |
| | | CA | 2412512 A1 | 03 January 2002 |
| | | CA | 2412512 C | 29 September 2009 |
| | | CA | 2413966 A1 | 27 December 2001 |
| | | CA | 2414050 A1 | 27 December 2001 |
| | | CA | 2414050 C | 22 June 2010 |
| | | CA | 2414056 A1 | 27 December 2001 |
| | | CN | 100386196 C | 07 May 2008 |
| | | CN | 100491457 C | 27 May 2009 |
| | | CN | 1227289 C | 16 November 2005 |
| | | CN | 1231535 C | 14 December 2005 |
| | | CN | 1298750 C | 07 February 2007 |
| | | CN | 1443217 A | 17 September 2003 |
| | | CN | 1535296 A | 06 October 2004 |
| | | CN | 1541161 A | 27 October 2004 |
| | | CN | 1636024 A | 06 July 2005 |
| | | CN | 1900151 A | 24 January 2007 |
| | | DE | 60128377 T2 | 10 January 2008 |
| | | DE | 60129817 T2 | 06 December 2007 |
| | | EP | 1294565 A2 | 26 March 2003 |
| | | EP | 1294565 B1 | 17 March 2010 |
| | | EP | 1299470 A1 | 09 April 2003 |
| | | EP | 1299470 B1 | 08 August 2007 |
| | | EP | 1325073 A2 | 09 July 2003 |
| | | EP | 1325073 B1 | 09 May 2007 |
| | | EP | 1373404 A2 | 02 January 2004 |
| | | EP | 1373404 B1 | 03 June 2009 |
| | | EP | 1810992 A1 | 25 July 2007 |
| | | ES | 2290159 T3 | 16 February 2008 |
| | | ES | 2325308 T3 | 01 September 2009 |
| | | ES | 2339331 T3 | 19 May 2010 |
| | | JP | 2004-501243 A | 15 January 2004 |
| | | JP | 2004-501259 A | 15 January 2004 |
| | | JP | 2004-501986 A | 22 January 2004 |
| | | JP | 2004-506049 A | 26 February 2004 |
| | | JP | 5087198 B2 | 28 November 2012 |
| | | KR | 10-2003-0015882 A | 25 February 2003 |
| | | KR | 10-2003-0019454 A | 06 March 2003 |
| | | US | 2003-0213938 A1 | 20 November 2003 |
| | | US | 2003-0215659 A1 | 20 November 2003 |
| | | US | 2004-0072005 A1 | 15 April 2004 |
| | | US | 2006-0276594 A1 | 07 December 2006 |
| | | US | 6800692 B2 | 05 October 2004 |
| | | US | 6932592 B2 | 23 August 2005 |

Form PCT/ISA/210 (patent family annex) (July 2022)

**INTERNATIONAL SEARCH REPORT**
Information on patent family members

International application No.

**PCT/KR2023/002563**

| Patent document cited in search report | Publication date (day/month/year) | Patent family member(s) | | Publication date (day/month/year) |
|---|---|---|---|---|
| | | US | 7125933 B2 | 24 October 2006 |
| | | US | 7135526 B2 | 14 November 2006 |
| | | WO | 01-98372 A2 | 27 December 2001 |
| | | WO | 01-98372 A3 | 17 April 2003 |
| | | WO | 01-98406 A2 | 27 December 2001 |
| | | WO | 01-98406 A3 | 09 October 2003 |
| | | WO | 01-98409 A1 | 27 December 2001 |
| | | WO | 02-00436 A2 | 03 January 2002 |
| | | WO | 02-00436 A3 | 23 May 2002 |

Form PCT/ISA/210 (patent family annex) (July 2022)

**EP 4 534 594 A1**

**Patent documents cited in the description**

- KR 0746253